# EUROPEAN PATENT APPLICATION

(11) **EP 1 956 821 A1**
(43) Date of publication of application: **13.08.2008**
(21) Application number: 08000790.9
(22) Date of filing: 16.01.2008
(51) Int. Cl.: H04N 1/00, H04N 1/32

(54) **Image processing apparatus, image forming method and recording medium**

(30) Priority: 08.02.2007 JP 2007029844
(71) Applicant: KONICA MINOLTA BUSINESS TECHNOLOGIES, INC., Chiyoda-ku Tokyo 100-0005 (JP)
(72) Inventor: Tsutsumi, Takahiro, Tokyo 100-0005 (JP)
(74) Representative: HOFFMANN EITLE

(57) **Abstract**

An image processing apparatus capable of outputting a document comprises a security layer generation means for generating a security layer having security information as an image; a document generation means for generating a document having the security information by giving to the document the security layer generated by the security layer generation means; and an output means for outputting the generated document having the security information.

## Description

This application claims priority to Japanese Patent Application No. 2007-029844 filed on February 8, 2007, the entire disclosure of which is incorporated herein by reference in its entirety.

### BACKGROUND OF THE INVENTION

### Field of the Invention

The present invention relates to: an image processing apparatus capable of outputting a user's created document (in this specification, "document" also includes "image" in its meaning) with security information such as a ground pattern, a watermark pattern, a security code and etc. thereon; an image forming method; a print instruction apparatus; and a computer readable recording medium storing in itself a program to make a computer execute processing.

### Description of the Related Art

The following description sets forth the inventor's knowledge of related art and problems therein and should not be construed as an admission of knowledge in the prior art.

The recent spread of copiers has improved the working environment, and now people can easily make document copies in offices, for example. At the same time, now people require more safety of documents that are confidential and for internal use only. To cope with this issue, security information such as a ground pattern, a watermark pattern, a security code and etc. are given to documents, recently.

Conventionally, a document having such security information is created by merging image data of a predetermined ground pattern to image data read out from a document, which processes are complicated.

According to Japanese Laid-open Patent Publication No. H11-195033, a password is preliminarily set on a layer having secret information, among a plurality of layers constituting one created electronic document, and if a user issues an instruction to display the layer having secret information and enters the password, the layer is displayed on a display or etc.

According to Japanese Laid-open Patent Publication No. 2004-213265, a document having an access token indicating access permission is preliminarily stored in an electronic document administration server, and a document creator gives an access right to a user hoping to access the electronic document, and then if the user makes access to the electronic document administration server by using the access right, he/she obtains the electronic document.

However, these arts disclosed in the publications above are applicable only for the case of displaying a document on a display or etc. Therefore, a user still has to issue an instruction to give to a document, security information such as a security code, a ground pattern or etc., every time the document is printed out by a printing apparatus such as a printer, which operations are such a burden for the user.

The description herein of advantages and disadvantages of various features, embodiments, methods, and apparatus disclosed in other publications is in no way intended to limit the present invention. Indeed, certain features of the invention may be capable of overcoming certain disadvantages, while still retaining some or all of the features, embodiments, methods, and apparatus disclosed therein.

### SUMMARY OF THE INVENTION

The preferred embodiments of the present invention have been developed in view of the above-mentioned and/or other problems in the related art. The Preferred embodiments of the present invention can significantly improve upon existing methods and/or apparatuses.

It is an objective of the present invention to provide an image processing apparatus that is capable of giving security information to a document by a simple user operation, not depending on how the document is outputted, on a display or on a sheet, when the document is outputted.

It is another objective of the present invention to provide an image forming method that is capable of giving security information to a document by a simple user operation, not depending on how the document is outputted, on a display or on a sheet, when the document is outputted.

It is yet another objective of the present invention to provide a print instruction apparatus capable of instructing a printing apparatus to print a document.

It is still yet another objective of the present invention to provide a computer readable recording medium storing in itself a program to make a computer of the print instruction apparatus execute processing by the image forming method or a print instruction method.

According to a first aspect of the present invention, an image processing apparatus capable of outputting a document comprises:
a security layer generation means for generating a security layer having security information as an image;
a document generation means for generating a document having the security information by giving to the document the security layer generated by the security layer generation means; and
an output means for outputting the generated document having the security information.

According to a second aspect of the present invention, an image forming method comprises:
generating a security layer having security information as an image;
generating a document having the security information, by giving to the document, the security layer generated in the security layer generating step; and
outputting the generated document having the security information.

According to a third aspect of the present invention, a computer readable recording medium stores in itself a program to make a computer of an image processing apparatus execute:
generating a security layer having security information as an image;
generating a document having the security information, by giving to the document, the security layer generated in the security layer generating step; and
outputting the generated document having the security information.

According to a fourth aspect of the present invention, a print instruction apparatus comprising:
a judgment means for judging whether or not a document has a security layer given thereto;
a request means for requesting a user to enter a security cancellation code, if the judgment means judges that the document has a security layer given thereto;
a control means for cancelling the security layer if an appropriate security cancellation code is entered in response to the request, then giving a print instruction to a print apparatus.

According to a fifth aspect of the present invention, a computer readable recording medium storing in itself a program to make a computer execute:
judging whether or not a document has a security layer given thereto;
requesting a user to enter a security cancellation code if it is judged in the judging step that the document has a security layer given thereto; and
cancelling the security layer if an appropriate security cancellation code is entered in response to the request, then giving a print instruction to a print apparatus.

The above and/or other aspects, features and/or advantages of various embodiments will be further appreciated in view of the following description in conjunction with the accompanying figures. Various embodiments can include and/or exclude different aspects, features and/or advantages where applicable. In addition, various embodiments can combine one or more aspect or feature of other embodiments where applicable. The descriptions of aspects, features and/or advantages of particular embodiments should not be construed as limiting other embodiments or the claims.

### BRIEF DESCRIPTION OF THE DRAWINGS

The preferred embodiments of the present invention are shown by way of example, and not limitation, in the accompanying figures, in which:

Fig. 1 is a view showing a configuration of a system in which an image forming apparatus according to Embodiment 1 of the present invention is used;

Fig. 2 is a block diagram showing a functional configuration of an image forming apparatus according to Embodiment 1 of the present invention;

Fig. 3 is a view to explain the method of merging together a security layer and a document layer;

Fig. 4 is a view to explain the method of merging together a security layer, a text layer and an image layer;

Fig. 5 is a view showing examples of an image displayed on a monitor and a document printed on a sheet;

Fig. 6 is a flowchart showing a procedure executed in the image forming apparatus of Fig. 2;

Fig. 7 shows an example of an accepting screen for accepting a user selection whether or not to give a security layer;

Fig. 8 is a block diagram showing a functional configuration of an image forming apparatus according to Embodiment 2 of the present invention;

Fig. 9 shows examples of document layers stored in a memory;

Fig. 10 is a table showing security levels of the document layers stored in the memory;

Fig. 11 is a flowchart showing a procedure executed in the image forming apparatus of Fig. 8;

Fig. 12 shows examples of a printed document;

Fig. 13 is a block diagram showing a configuration of a print instruction apparatus according to Embodiment 3 of the present invention;

Fig. 14 is a flowchart showing a procedure executed in the print instruction apparatus of Fig. 13;

Fig. 15 shows an example of an accepting screen for accepting a security cancellation code entered by a user;

Fig. 16 shows an example of a printed document; and

Fig. 17 shows an example of a document printed with security information thereon.

### DETAILED DESCRIPTION OF THE PREFERRED EMBODIMENTS

In the following paragraphs, some preferred embodiments of the invention will be described by way of example and not limitation. It should be understood based on this disclosure that various other modifications can be made by those in the art based on these illustrated embodiments.

### EMBODIMENT -1

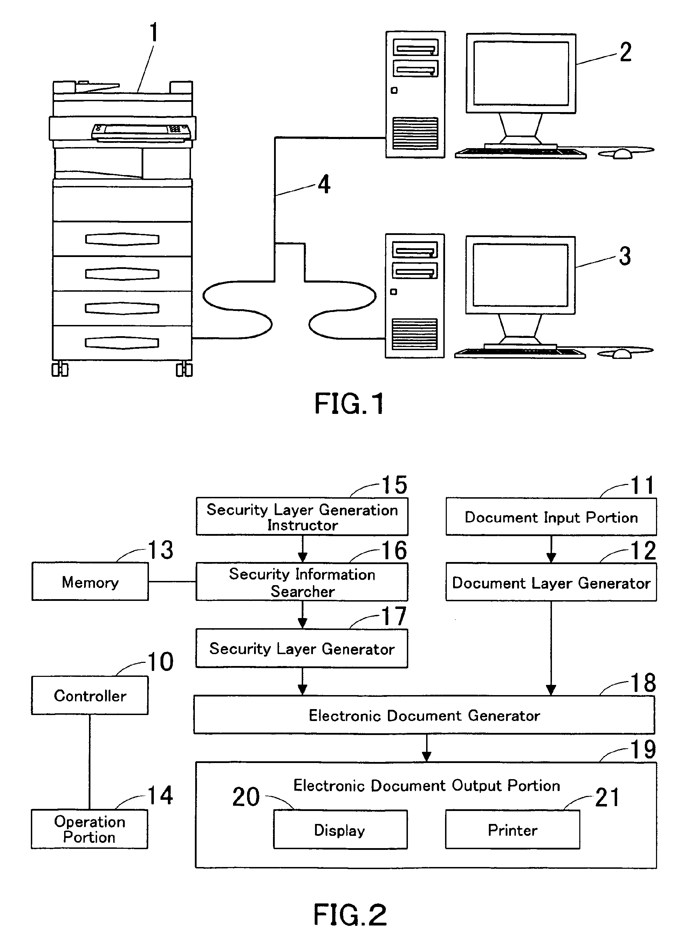

A shown in Fig. 1, a system comprises an image forming apparatus 1 such as a MFP (Multi Function Peripheral) that is an image processing apparatus, and terminal apparatuses 2 and 3 that are personal computers, which are interconnected via a network 4.

As shown in Fig. 2, the image forming apparatus 1 of Fig. 1 comprises a controller 10, a document input portion 11, a document layer generator 12, a memory 13, an operation portion 14, a security layer generation instructor 15, a security information searcher 16, a security layer generator 17, an electronic document generator 18 and an electronic document output portion 19. And the respective portions mentioned right above excluding the controller 10 are connected to the controller 10.

The controller 10 comprises a CPU (not shown in Figure), a ROM (not shown in Figure) storing in itself a program executed by the CPU and other data, a RAM (not shown in Figure) providing an operation area for the CPU to execute the program, and other portions. And the controller 10 centrally controls the entire image forming apparatus. Detailed explanation about its control operations will be provided later. Although a connection line is omitted in Figure, it is obvious that the controller 10 is functionally connected to the respective portions shown in Figure.

The document input portion 11 is used by a user to input a document, and is a scanner apparatus that reads out an image from a document, for example. Alternatively, data can be inputted via a printer driver from the terminal apparatuses 2 and 3.

The document layer generator 12 generates a document layer by processing in the heretofore known manner, the document inputted by the document input portion 11

The memory 13 is a recording medium such as a hard disk drive, and stores in itself various data including security information such as a ground pattern, a watermark pattern, a security code and etc. (in this embodiment, a ground pattern is employed for example), and information of resolution rates set by a user.

The operation portion 14 is used by a user to perform various entry operations, and comprises numeric keys and etc.

The security layer generation instructor 15 accepts an instruction issued by a user to generate a security layer, and also administers ON/OFF information indicated by a security generation flag.

The security information searcher 16 searches and picks up security information among those stored in the memory 13.

The security layer generator 17 generates a security layer having the security information received from the security information searcher 16, by processing the security information in the heretofore known manner.

The electronic document generator 18 generates an electronic document by merging together, in other words, laying one above the other, the document layer generated by the document layer generator 12 and the security layer generated by the security layer generator 17.

The electronic document output portion 19 comprises a display 20 and a printer 21, and outputs a document according to a user instruction.

The display 20 displays on itself, various messages, an entry accepting screen, a selection screen and a document having security information for a user. The printer 21 prints on a sheet, a document having security information.

### <Method of Giving Layer>

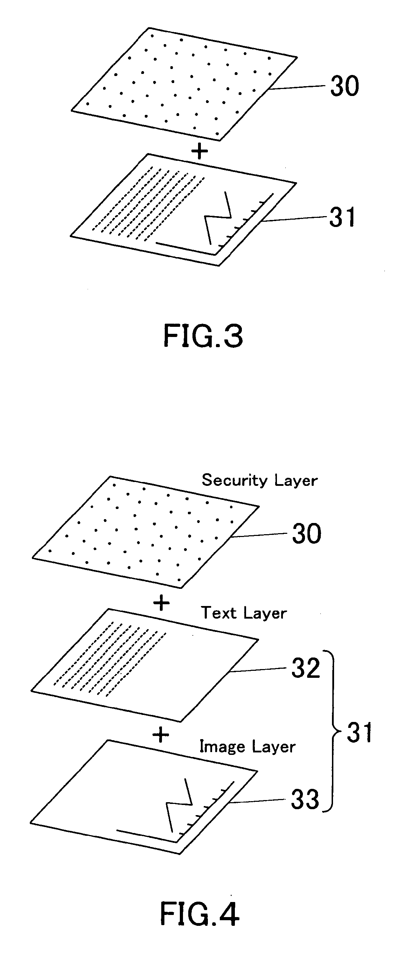

The method of giving a security layer will be explained with reference to Fig. 3 and Fig. 4.

As shown in Fig. 3, a security layer 30 has security information including a ground pattern. And the security layer 30 is laid on a document layer 31 that is generally stored as a JPEG image.

Meanwhile, an electronic document sometimes has another plurality of layers in addition to the security layer 30, as shown in Fig. 4. This method of giving a security layer is effective in compressing an electronic document at a high compression rate. Concretely, the document layer 31 is split into a text layer 32 and an image layer 33 by extracting only a text portion from the document layer 31. Then a space losing the text portion on the image layer 33 is daubed with a background color to raise a JPEG compression rate. As for the order of laying the security layer 30, the text layer 32 and the image layer 33, the security layer 30 is laid on the top to be previewed on the display from the top, as shown in Fig. 4. The document layer merged to the security layer may include a plurality of text layers 32 and a plurality of image layers 33.

### <Resolution Rate of Layer>

The image forming apparatus according to this embodiment is sometimes enabled to set a resolution rate for each layer. In this embodiment, an electronic document is generated at a rather low resolution rate, because setting a high resolution rate would cause a huge volume of file size. Further, a resolution rate that is other than or the same as that set for the other layers is set for a security layer. However, if setting an unnecessarily low resolution rate would cause a loss of the primary function of security layer, in other words, would make its dots that are isolated points affecting the amount of information of security layer and constitute a ground pattern or etc., too large. Therefore, a security layer is generated at a resolution rate that is high enough to leverage the primary function of security information.

Meanwhile, a security code, a ground pattern, a watermark pattern and etc. are usually generated in one single color. In this embodiment, 1 bit per pixel data expressing forms and header information indicating a layer color are given to a security layer. In this way, a security layer is generated at a high resolution rate, but at a high compression rate at the same time, and thereby would not cause a huge volume of file size.

### <Displaying Layer>

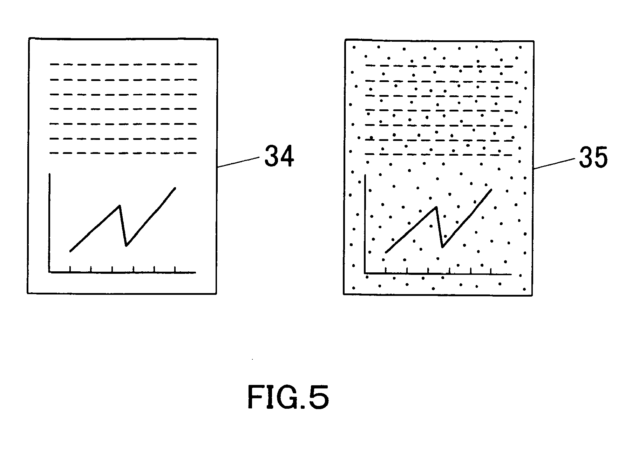

In this embodiment, attributes of Monitor Display ON/OFF and Print ON/OFF can be given to each layer, depending on a format of an electronic document. If those can be given, Monitor Display OFF and Print ON are preferably set for a security layer, because there is no need of displaying security information on a monitor, in other words, security information is already given as electronic data to header information or etc. of the electronic document, and thereby security is ensured enough. Fig. 5 shows an example of an electronic document displayed on a monitor and an example of an electronic document printed on a sheet, which are obtained if Monitor Display OFF and Print ON are set for a security layer. When the electronic document is displayed on a monitor, security information does not come up on the monitor due to the Monitor Display OFF setting, as shown in a monitor image 34. Meanwhile, when the electronic document is printed, a document 35 is outputted on a sheet by the printer 21, with security information thereon due to the Print ON setting, as shown in a monitor image 35.

### <Encryption of Electronic Document>

If by any possibility a document including a security layer is maliciously changed by a user, the security function cannot be leveraged. To cope with this issue, in this embodiment, data is prohibited from being changed by a user or encrypted then made into a file, if a security layer is merged to a document layer.

### <Operations of Image Forming Apparatus>

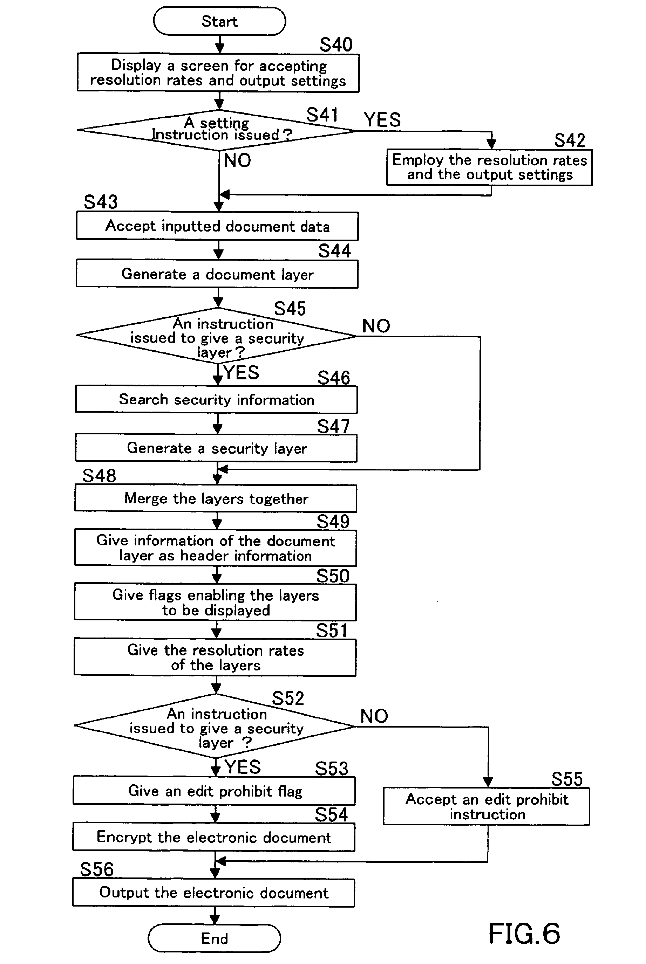

Hereinafter, a procedure executed in the image forming apparatus 1 will be explained with a flowchart shown in Fig. 6. The procedure of this flowchart is executed by the CPU of the controller 10 according to an operation program stored in a recording medium such as the ROM.

Under the control of the controller 10, a setting accepting screen for accepting resolution rates and output settings for a document layer and a security layer (how to output a document layer and a security layer, on a monitor and on a sheet), is displayed on the display 20 for a user hoping to use the image forming apparatus 1 (Step S40). And then, the routine waits until the user issues a setting instruction (Step S41).

If a setting instruction given by a user is accepted in Step S41 (YES in Step S41), under the control of the controller 10, resolution rates and output settings for the respective layers are employed according to the user instruction (Step S42), then the routine proceeds to Step S43. If the user does not issue a setting instruction (NO in Step S41), the routine directly proceeds to Step S43. In this case, default settings preliminarily stored in the image forming apparatus, are employed.

Subsequently, under the control of the controller 10, document data inputted by the user is accepted by the document input portion 11 (Step S43).

Then, the inputted document data is transmitted to the document layer generator 12, and under the control of the controller 10, the document layer 31 of Fig. 3, for example, is generated by the document layer generator 12, by processing the received document data in the heretofore known manner (Step S44).

Alternatively, the document layer 31 of Fig. 4, consisting of a plurality of layers that are the text layer 32 and the image layer 33, can be generated.

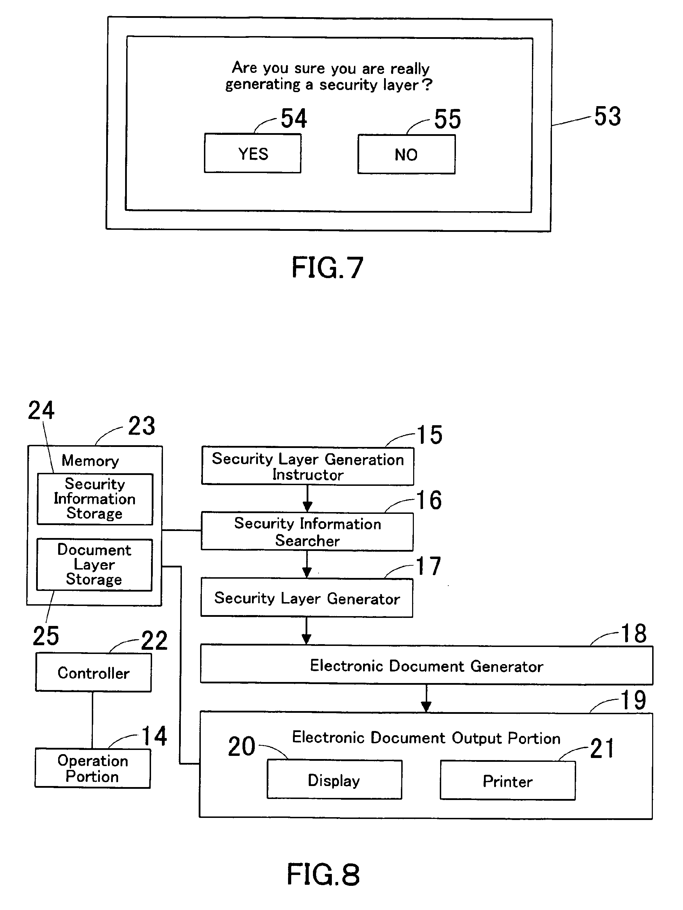

Subsequently, under the control of the controller 10, a security layer giving confirmation screen 53 (shown in Fig. 7) for making sure if the user is really generating the security layer 30 via the security layer generation instructor 15 in order to give to the document layer 31 generated in Step S44, is displayed on the display 20. And then, the routine waits until the user issues an instruction to generate the security layer, by using the operation portion 14 (Step S45).

If the user issues an instruction to generate the security layer by pressing a "YES" button 54 in the security layer giving confirmation screen 53 (YES in Step S45), under the control of the controller 10, security information stored in the memory 13 is searched and read out by the security information searcher 16 (Step S46).

And, under the control of the controller 10, by the security layer generator 17, a security image is generated based on the readout security information and a security layer 30 having a ground pattern is also generated (Step S47). And then, the routine proceeds to Step S48. If the user presses a "NO" button 55 in the security layer giving confirmation screen 53 (NO in Step S45), the routine directly proceeds to Step S48 without generating a security layer.

In Step S48, under the control of the controller 10, an electronic document is generated by the electronic document generator 18, by merging together, in other words, laying the security layer 30 on the document layer 31, as shown in Fig. 3. If the document layer 31 consists of the text layer 32 and the image layer 33, the security layer 30 is laid on the top, the text layer 32 is laid in the middle and the image layer 33 is laid at the bottom, as shown in Fig. 4. If the user does not issue an instruction to generate the security layer (NO in Step S45), only the plurality of document layers are merged together. If the user does not issue an instruction to generate the security layer and the number of document layers is only one, the routine skips that merger process and proceeds to the following Step.

Subsequently, under the control of the controller 10, header information indicating number of colors, size, compression method and etc. of the document layer is given (Step S49), and header information indicating flags that enables the respective layers to be displayed is given (Step S50), and then header information indicating the resolution rates employed by the controller 10 according to a user instruction is also given (Step S51).

Further, header information indicating the output settings employed by the controller 10 according to a user instruction is also given. For example, under the condition where Monitor Display ON and Print ON are set for the document layer and Monitor Display OFF and Print ON are set for the security layer, a monitor image 34 not having security information is displayed on the display 20 when it is outputted on a monitor, meanwhile a document 35 having security information thereon is printed out by the printer 21 when it is outputted on a sheet.

Then in Step S52, under the control of the controller 10, it is judged whether or not the user issues an instruction to generate a security layer.

If it is judged that the user issues an instruction to generate a security layer (YES in Step S52), under the control of the controller 10, an edit prohibit flag disabling an electronic document to be edited, is given to the electronic document (Step S53), and the electronic document is encrypted (Step S54). Then the routine proceeds to Step S56.

As described above, a user can prevent an electronic document from being maliciously changed, by giving to the electronic document an edit prohibit flag disabling edit, and further can ensure higher security by encrypting the electronic document. On the other hand, if it is judged in Step S52 that the user does not issue an instruction to generate a security layer (NO in Step S52), an edit prohibit accepting screen for accepting a user instruction whether or not to prohibit an electronic document from being edited, is displayed on the display 20, and a user instruction is accepted (Step S55). And then, the routine proceeds to Step S56.

In Step S56, under the control of the controller 10, the electronic document is displayed on the display 20 and printed by the printer 21. And then, the routine terminates.

In this embodiment, a ground pattern is employed as security information. Alternatively, a watermark pattern, a security code, a name of the originator of the electronic document or other, for example, can be employed as security information, or a combination of those can also be employed as security information.

Further, it can be also configured such that a plurality of security information are preliminarily stored in the memory 13, and a user selects among the plurality of security information.

As described above in this embodiment, a security layer having security information is generated and the security layer is given to a document layer, and thereby the document layer keeps the security layer. And, when a document is outputted on a sheet, it is automatically printed out with security information such as a ground pattern, a watermark or etc. thereon. Thus, the user does not have to issue an instruction to give security information every time a document is outputted on a sheet. That would reduce user burden and improve user operability.

### EMBODIMENT -2

Hereinafter, another embodiment of the present invention will be explained with reference to some figures.

As shown in Fig. 8 showing a functional configuration of the image forming apparatus 1 according to this embodiment, the image forming apparatus 1 comprises a controller 22, an operation portion 14, a security layer generation instructor 15, a security information searcher 16, a security layer generator 17, an electronic document generator 18, an electronic document outputter 19 and a memory 23, and the respective portions excluding the controller 22 are connected to the controller 22. Since the security layer generation instructor 15, the security information searcher 16, the security layer generator 17, the electronic document generator 18 and the electronic document outputter 19 shown in Fig. 8, have the same functions as those of the image forming apparatus according to Embodiment 1 shown in Fig. 2, these portions will be referred with the same codes but will not be explained in details hereinafter.

The controller 22 comprises a CPU, a ROM, a RAM and etc., and centrally controls the entire image forming apparatus. Further, in this embodiment, the controller 22 judges whether or not a security level given to a document layer is higher than a predetermined value. Detailed explanation will be provided later. Although a connection line is omitted in Figure, it is obvious that the controller 22 is functionally connected to the respective portions shown in Figure.

The memory 23 is a recording medium such as a hard disk drive, and comprises a security information storage 24 storing security information in itself and a document layer storage 25 storing document layers in itself. Further, the memory 23 stores header information of the document layers, header information indicating resolution rates of the layers, and header information indicating flags enabling the layers to be displayed.

The security information storage 24 stores various security information in itself.

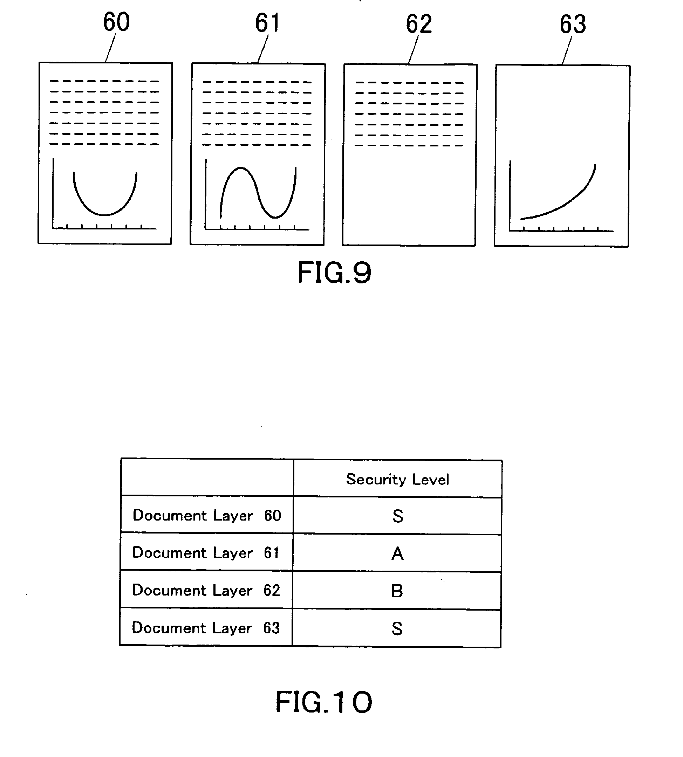

The document layer storage 25 stores in itself a document layer that is a document created by a user or inputted by a scanner, etc. Further, in this embodiment, security levels are set according to user instruction, for the respective layers that are for example, a document layer 60, a document layer 61, a document layer 62 and a document layer 63 shown in Fig. 9 and Fig. 10, and the document layer storage 25 also stores information of these security levels in itself.

### (Operations of the Image Forming Apparatus)

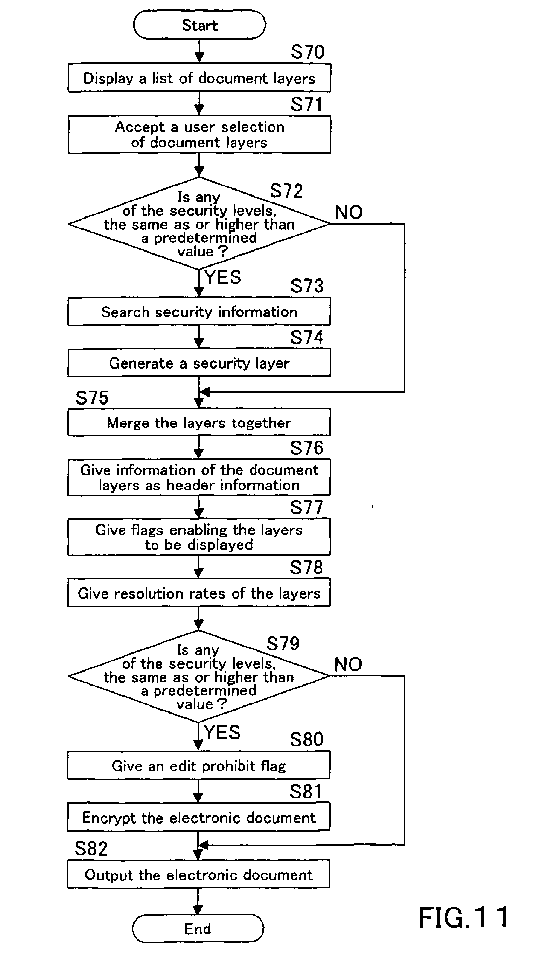

Operations of the image forming apparatus 1 of Fig. 8 will be explained with a flowchart shown in Fig. 11. The procedure of Fig. 11 is executed by a CPU (not shown in Figure) of the controller 22 according to an operation program stored in a recording medium such as a ROM (not shown in Figure).

Under the control of the controller 22, a list of document layers stored in the document layer storage 25 of the memory 23 is displayed on the display 20 (Step S70).

And, under the control of the controller 22, a user selects more than one document layers via the operation panel 14 and this selection is accepted (Step S71), and security levels set for the respective document layers selected by the user, are examined (Step S72).

If it is judged in Step S72 that any of the security levels set for the respective document layers is the same as or higher than a predetermined reference value (YES in Step S72), under the control of the controller 22, security information is searched and read out from the security information storage 24, by the security information searcher 16 (Step S73). Subsequently, under the control of the controller 22, a security layer is generated based on the readout security information, by the security layer generator 17 (Step S74), then the routine proceeds to Step S75. On the other hand, if it is judged in Step S72 that all of the security levels set for the respective document layers are lower than a predetermined reference value (NO in Step S72), the routine directly proceeds to Step S75.

In Step S75, under the control of the controller 22, an electronic document is generated by the electronic document generator 18, by merging together, in other words, laying one above the other, the document layers and the security layer. On the other hand, if a security layer is not generated (NO in Step S72), the plurality of document layers are simply merged together. If a security layer is not generated and the number of document layers is only one, the routine skips that process and directly proceeds to the following Step.

Then, header information indicating number of colors, size, compression method and etc. of the respective document layers is given (Step S76), and header information indicating flags enabling the respective layers to be displayed is given (Step S77), and then header information indicating resolution rates of the respective layers is also given (Step S78).

In Step S79, under the control of the controller 22, it is judged whether or not any of the security levels set for the respective document layers is the same as or higher than a predetermined reference value.

If it is judged that any of the security levels set for the respective document layers is the same as or higher than a predetermined reference value (YES in Step S79), under the control of the controller 22, an edit prohibit flag disabling an electronic document to be edited, is given the electronic document (Step S80), and the electronic document is encrypted (Step S81). Then the routine proceeds to Step S82.

As described above, a user can prevent an electronic document from being maliciously changed, by giving to the electronic document an edit prohibit flag disabling edit. On the other hand, if it is judged in Step S79 that all of the security levels set for the respective document layers are lower than a predetermined reference value (NO in Step S80), the routine directly proceeds to Step S82.

In Step S82, under the control of the controller 22, the electronic document is printed by the printer 21. Then the routine terminates.

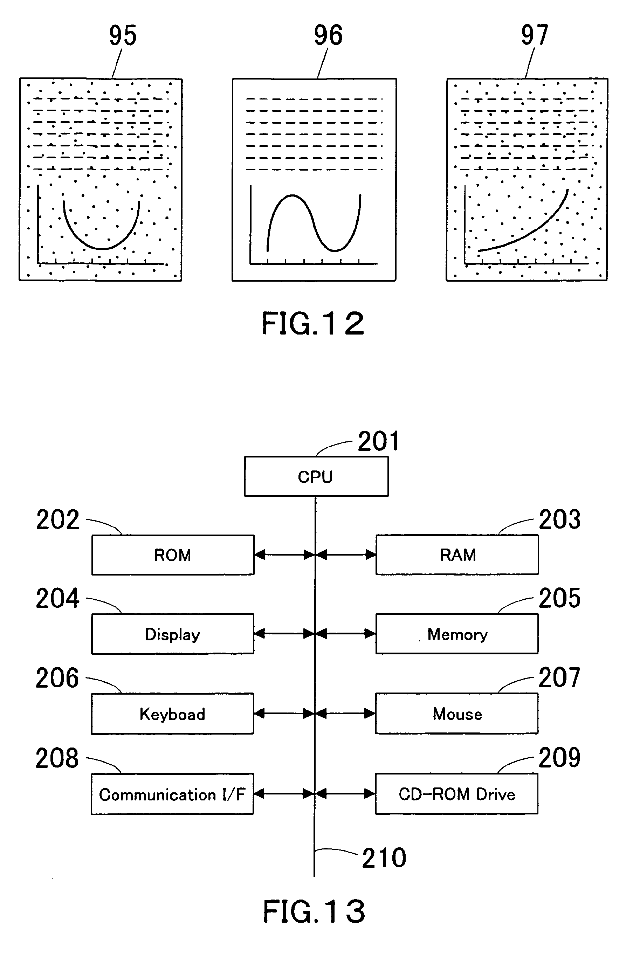

For example, the document layers 60 through 63 of Fig. 9 are preliminarily stored in the document layer storage 25 and a user selects the document layer 60 or 61 therefrom, under the assumption that a security level S set for the document layer 60 is the same or higher than a reference value and a security level A set for the document layer 61 is lower than a reference value. In this case, a security layer is given to the document layer 60, but is not given to the document layer 61. Then, an electronic document is generated from the document layer 60 or 61. And as shown in Fig. 12, the electronic document generated from the document layer 60 is printed on a sheet to be a printed image 95, meanwhile the electronic document generated from the document layer 61 is printed on a sheet to be a printed image 96.

In another case, an electronic document is generated by merging together the document layers 62 and 63 of Fig. 9, under the assumption that a security level B set for the document layer 62 is lower than a reference value and a security level S set for the document layer 63 is the same or higher than a reference value. In this case, it is judged that the security layer S set for the document layer 63 from that the electronic document is generated, is the same or higher than a reference value (YES in Step S72), and thus a security layer, the document layer 62 and the document layer 63 are merged together (Step S75). The electronic document generated based on the two document layers is printed on a sheet to be a printed image 97 shown in Fig. 12. If all of the security levels set for the respective document layers are lower than a reference value, a security layer is not given.

As described above in this embodiment, if a document layer has a security level that is the same or higher than a predetermined value, or if an electronic document includes any document layer having a security level that is the same or higher than a predetermined value, security information is automatically given to the document layer, and thereby security information is properly given to a confidential document requiring a high security level.

### EMBODIMENT -3

Hereinafter, yet another embodiment of the present invention will be explained with reference to some figures.

This embodiment relates to the terminal apparatus 2 or 3 that is used in the image forming system shown in Fig. 1 and functions as a print instruction apparatus instructing the image forming apparatus 1 to print. Since the terminal apparatuses 2 and 3 have the same configurations, the terminal apparatus 2 will be explained on behalf of the two terminal apparatuses.

Fig. 13 is a block diagram showing a configuration of a print instruction apparatus (the terminal apparatus 2) according to Embodiment 3 of the present invention.

The print instruction apparatus 2 is a personal computer as previously mentioned, and comprises a ROM 202, a RAM 203, a display 204, a memory 205, a keyboard 206, a mouse 207, a communication interface 208 and a CD-ROM drive 209, which are connected to the bus line extended from a CPU 201, respectively.

The CPU 201 centrally controls the entire print instruction apparatus. Further, in this embodiment, the CPU 201 judges whether or not an electronic document includes a security layer, and accepts a security cancellation code entered by a user, and further deletes the security layer when accepts the security cancellation code.

The ROM 202 stores in itself an operation program for the CPU 201 and other data.

The RAM 203 provides an operation area in which the CPU 201 executes processing according to the operation program.

The display 204 displays on itself details of files and etc. In this embodiment, a CRT is employed as the display 204.

The keyboard 206 and the mouse 207 are used by a user to perform entry operations.

The communication interface 208 functions as a communication medium that exchanges data with the image forming apparatus 1 and etc.

The memory 205 stores in itself document data, image data and etc. created by a user by using the keyboard 206 and the mouse 207, application software, and other data. In this embodiment, a hard disk drive (HDD) is employed as the memory 205.

The CD-ROM drive 209 drives a CD-ROM.

### (Operations of Print Instruction Apparatus)

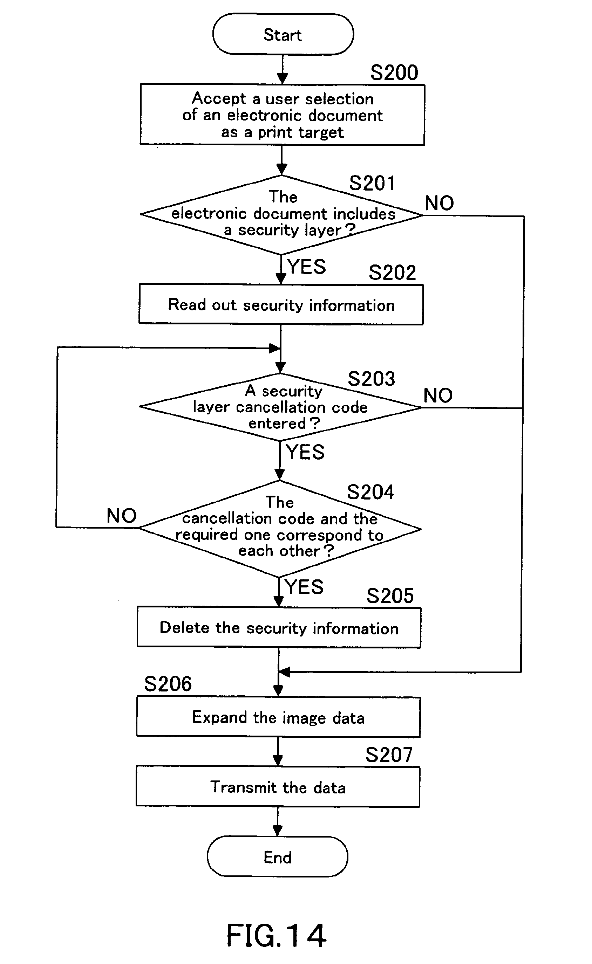

Hereinafter, a procedure executed in the print instruction apparatus 2 will be explained with reference to a flowchart shown in Fig. 14. The procedure of this flowchart is executed by the CPU 201 according to an operation program stored in a recording medium such as the ROM 202.

Under the control of the CPU 201, a user selects an electronic document as a print target among those stored in the HDD 205 and this selection is accepted (Step S200). And it is judged whether or not the electronic document includes a security layer, based on header information of the electronic document (Step S201).

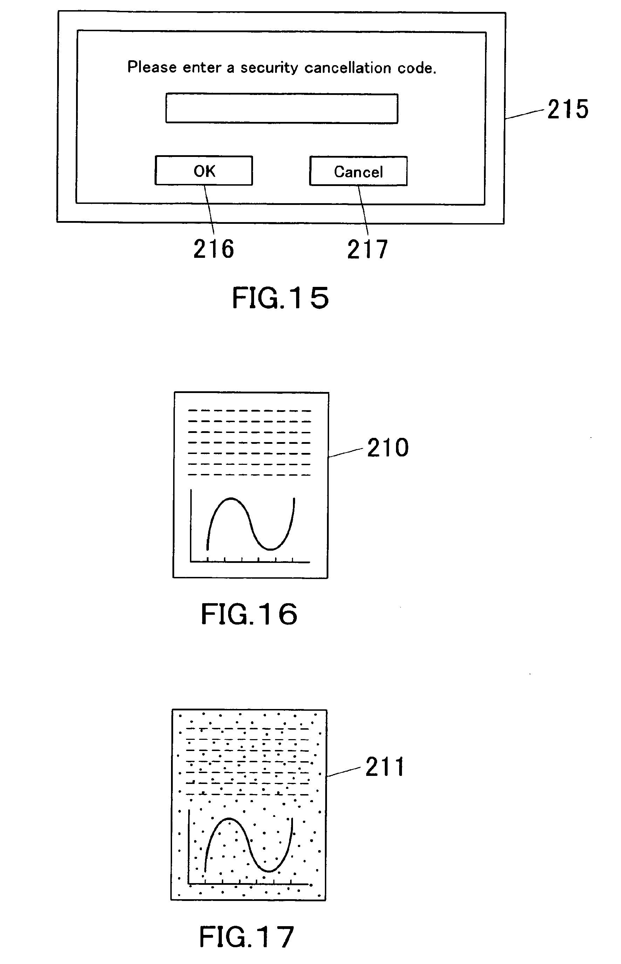

If it is judged that it includes a security layer (YES in Step S201), under the control of the CPU 201, security information is read out from the layer (Step S202), and a cancellation code entry screen 215 (shown in Fig. 15) is displayed on the CRT 204 to cancel the security layer. On the other hand, if it is judged that the selected electronic document includes no security layer (NO in Step S201), the routine proceeds to Step S206.

If a user enters a cancellation code then presses an "OK" button 216 in Step S203 (YES in Step S203), under the control of the CPU 201, it is judged whether or not the cancellation code entered by the user and the one required by the CPU 201 correspond to each other (Step S204).

If it is judged in Step S204 that the two codes do not correspond (NO in Step S204), the routine returns to Step S203, and the cancellation code entry screen 215 is displayed on the CRT 204 again and the routine waits until the user enters another cancellation code. On the other hand, if it is judged in Step S204 that the two codes correspond (YES in Step S204), under the control of the CPU 201, security information such as a ground pattern or other, which is preliminarily set for the electronic document is deleted from the electronic document (Step S205).

Then in Step S206, under the control of the CPU 201, data is expanded and transmitted to the image forming apparatus 1 via the communication I/F (Step S207). Then the routine terminates.

The image forming apparatus 1 receiving the data, prints out a document 210 losing the security information as shown in Fig. 16. On the other hand, if a user does not enter a security cancellation code in Step S203 (NO in Step S203), information of a security layer is also expanded as a portion of image information (Step S206), and is transmitted via the communication I/F (Step S207). Then the routine terminates.

In this case, the image forming apparatus 1 receiving the data, prints out a document 211 still having the security information as shown in Fig. 17.

As described above in this embodiment, if a user hoping to access an electronic document and holding a security cancellation code, enters the security cancellation code, he/she obtains a document printed out without security information thereon.

### SUMMARY OF THE EMBODIMENTS

The embodiments explained above include the image forming apparatus, the image forming method, the document output processing program and etc. as follows.

(1) An image forming apparatus capable of administering information of a plurality of layers, comprising:
a generator that generates a security layer having security information;
a document generator that generates a document having the security information, by merging the generated security layer to a document layer; and
an output portion that outputs the generated document having the security information.

With this image forming apparatus, a security layer having security information is simply generated then merged to a document layer, and thereby the document layer retains the security layer and a document is automatically printed out with the security information thereon when it is outputted on a sheet. Therefore, a user does not have to issue an instruction to give security information every time a document is printed out, and this reduces user burden and improves user operability.

(2) The image forming apparatus according to (1), wherein the output portion is a display that displays on a monitor the document having the security information and is a printer that prints on a sheet the document having the security information, can be configured to further comprise a layer output instructor that instructs the layer included in the document having the security information, to be outputted in a different manner depending on how the document is outputted, on a monitor or on a sheet.

With this image forming apparatus, a user is allowed to issue an instruction to give security information when a document is outputted on a monitor or on a sheet.

(3) The image forming apparatus according to (1) can be configured to comprise a resolution rate setting portion that sets a resolution rate for the layer included in the document having the security information.

With this image forming apparatus, a user is allowed to adjust a file size of a document having security information, by changing resolution rates set for the document.

(4) The image forming apparatus according to (1) can be configured to further comprise an edit permit/prohibit setting portion that enables/disables a document to be edited, and wherein the edit permit/prohibit setting portion disables data of the document having the security information to be edited, if the document is generated.

With this image forming apparatus, a document is disabled to be edited, if security information is given to the document. And thereby, the document is prevented from being maliciously changed by a third person.

(5) The image forming apparatus according to (1) can be configured to further comprise a data encryptor that encrypts document data, and wherein the data encryptor encrypts the document having the security information if the document is generated.

With this image forming apparatus, a document having security information can be encrypted, and thereby the document is protected more strongly.

(6) An image forming method comprising:
generating a security layer having security information;
generating a document having the security information, by merging to a document layer, the security layer generated in the former generating step; and
outputting the generated document having the security information.

With this image forming method, a security layer is simply generated then merged to a document layer, and thereby a document having security information is generated. And a user can obtain the document printed with security information thereon, when the document is outputted.

(7) A document output processing program stored in a computer readable recording medium to make a computer of an image forming apparatus execute:
generating a security layer having security information;
generating a document having the security information, by merging to a document layer, the security layer generated in the former generating step; and
outputting the generated document having the security information.

With this document output processing program, a computer is made execute a series of processes: generating a security layer, generating a document having the security information by merging the generated security layer to a document layer, and outputting the generated document.

(8) An image forming apparatus comprising:
a storage that stores security information in itself;
a judger that judges security levels set for a document;
a security information selector that selects security information to give to the document, among those stored in the storage, depending on the security levels judged by the judger;
a security layer generator that generates a security layer having the selected security information;
a document generator that generates a document having the security information, by giving to the document, the security layer generated by the security layer generator;
   and
an output portion that outputs the document having the security information, which is generated by the document generator.

With this image forming apparatus, security information is automatically given to a document if security levels set for the document is higher than a predetermined value, and thereby security information is properly given to a confidential document requiring a high security level.

(9) An image forming method comprising:
judging security levels set for a document;
selecting security information to give to the document, depending on the security levels judged in the judging step;
generating a security layer having the selected security information;
generating a document having the security information, by giving to the document, the security layer generated in the security layer generating step; and
outputting the generated document having the security information.

With this image forming method, security levels set for a document are judged, security information is selected depending on the judged security level, and a security layer is generated based on the selected security information then given to the document layer. And a user can obtain a document printed with the security information thereon, suitable for the security levels set for the document, when the document is outputted.

(10) A document output processing program stored in a computer readable recording medium to make a computer of an image forming apparatus execute:
judging security levels set for a document;
selecting security information to give to the document, depending on the security levels judged in the judging step;
generating a security layer having the selected security information;
generating a document having the security information, by giving to the document, the security layer generated in the security layer generating step; and
outputting the generated document having the security information.

With this document output processing program, a computer is made execute a series of processes: judging security levels set for a document, selecting security information depending on the judged security levels, generating a security layer having the selected security information, giving the generated security layer to the document, and outputting a document having the security information.

(11) A print instruction apparatus comprising:
a judger that judges whether or not a document includes a security layer;
a requester that requests a user to enter a security cancellation code, if the judger judges that the document includes a security layer; and
a controller that cancels the security layer then instructs a print apparatus to print the document, if the user enters the security cancellation code in response to the request.

With this print instruction apparatus, it is judged whether or not a document includes a security layer, and a user is requested to enter a security cancellation code depending on the judging result, and then the security layer is cancelled if the security cancellation code is entered. And the user can obtain the document printed without security information thereon, when the document is outputted.

(12) A print instruction method comprising:
judging whether or not a document includes a security layer;
requesting a user to enter a security cancellation code, if it is judged in the judging step that the document includes a security layer; and
cancelling the security layer then instructing a print apparatus to print the document, if the user enters the security cancellation code in response to the request.

With this print instruction method, it is judged whether or not a document includes a security layer, and a user is requested to enter a security cancellation code if it is judged that the document includes a security layer, and then the security layer is cancelled if the user enters the security cancellation code. And he/she can obtain the document printed without security information thereon, when the document is outputted.

(13) A print instruction program stored in a computer readable recording medium to make a computer execute:
judging whether or not a document includes a security layer;
requesting a user to enter a security cancellation code, if it is judged in the judging step that the document includes a security layer; and
cancelling the security layer then instructing a print apparatus to print the document, if the security cancellation code is entered in response to the request.

With this print instruction program, a computer is made execute a series of processes: judging whether or not a document includes a security layer, requesting a user to enter a security cancellation code if it is judged that the document includes a security layer, and cancelling the security layer if the user enters the security cancellation code.

While the present invention may be embodied in many different forms, a number of illustrative embodiments are described herein with the understanding that the present disclosure is to be considered as providing examples of the principles of the invention and such examples are not intended to limit the invention to preferred embodiments described herein and/or illustrated herein.

While illustrative embodiments of the invention have been described herein, the present invention is not limited to the various preferred embodiments described herein, but includes any and all embodiments having equivalent elements, modifications, omissions, combinations (e.g. of aspects across various embodiments), adaptations and/or alterations as would be appreciated by those in the art based on the present disclosure. The limitations in the claims are to be interpreted broadly based on the language employed in the claims and not limited to examples described in the present specification or during the prosecution of the application, which examples are to be construed as non-exclusive. For example, in the present disclosure, the term "preferably" is non-exclusive and means "preferably, but not limited to". In this disclosure and during the prosecution of this application, means-plus-function or step-plus-function limitations will only be employed where for a specific claim limitation all of the following conditions are present In that limitation: a) "means for" or "step for" is expressly recited; b) a corresponding function is expressly recited; and c) structure, material or acts that support that structure are not recited. In this disclosure and during the prosecution of this application, the terminology "present invention" or "invention" may be used as a reference to one or more aspect within the present disclosure. The language present invention or invention should not be improperly interpreted as an identification of criticality, should not be improperly interpreted as applying across all aspects or embodiments (i.e., it should be understood that the present invention has a number of aspects and embodiments), and should not be improperly interpreted as limiting the scope of the application or claims. In this disclosure and during the prosecution of this application, the terminology "embodiment" can be used to describe any aspect, feature, process or step, any combination thereof, and/or any portion thereof, etc. In some examples, various embodiments may include overlapping features. In this disclosure and during the prosecution of this case, the following abbreviated terminology may be employed: "e.g." which means "for example", and "NB" which means "note well".

## Claims

1. An image processing apparatus capable of outputting a document, comprising:
a security layer generation means for generating a security layer having security information as an image;
a document generation means for generating a document having the security information by giving to the document the security layer generated by the security layer generation means; and
an output means for outputting the generated document having the security information.

2. The image processing apparatus recited in Claim 1, wherein:
the output means is a display that displays on a monitor the document having the security information and is a printer that prints on a sheet the document having the security information,
and further comprising:
a layer output instruction means for instructing the layer included in the document having the security information, to be outputted in a different manner depending on how the document is outputted, on a monitor or on a sheet.

3. The image processing apparatus recited in Claim 1, further comprising a resolution rate setting means for setting a resolution rate for the layer included in the document having the security information.

4. The image processing apparatus recited in Claim 1, further comprising:
an edit permit/prohibit setting means for enabling/disabling a document to be edited,
and wherein:
the edit permit/prohibit setting means disables data of the document having the security information to be edited, when the document is generated.

5. The image processing apparatus recited in Claim 1, further comprising a data encryption means for encrypting document data, and wherein the data encryption means encrypts the document having the security information when the document is generated.

6. The image processing apparatus recited in Claim 1, further comprising:
a storage means for storing in itself the security information;
a judgment means for judging a security level set for a document; and
a security information selection means for selecting security information to give to the document, among those stored in the storage, depending on the security level judged by the judgment means,
and wherein:
the security layer generation means for generating a security layer having the security information that is selected by the security information selection means.

7. The image processing apparatus recited in Claim 1, further capable of administrating information of a plurality of layers, wherein:
the document generation means generates a document having the security information by merging the security layer to the document layer; and
the output means is capable of outputting the security layer and the document layer laid one above the other.

8. An image forming method comprising:
generating a security layer having security information as an image;
generating a document having the security information, by giving to the document, the security layer generated in the security layer generating step; and
outputting the generated document having the security information.

9. The image forming method recited in Claim 8, further comprising:
judging a security level set for the document;
selecting security information to give to the document depending on the security level judged in the judging step; and
generating a security layer having the selected security information,
and wherein:
generating a security layer having the security information selected in the security information selecting step, in the security layer generating step.

10. The image forming method recited in Claim 8, wherein the document having the security information is generated by merging the security layer to a document layer in the document generating step, and the security layer and the document layer laid one above the other can be outputted in the outputting step.

11. A computer readable recording medium storing in itself a program to make a computer of an image processing apparatus execute:
generating a security layer having security information as an image;
generating a document having the security information, by giving to the document, the security layer generated in the security layer generating step; and
outputting the generated document having the security information.

12. The computer readable recording medium recited in Claim 11, making the computer further execute:
judging a security level set for the document;
selecting security information to give to the document, depending on the security level judged in the judging step; and
generating a security layer having the selected security information,
and wherein:
a security layer having the security information selected in the security information selecting step, is generated in the security layer generating step.

13. The computer readable recording medium recited in Claim 11, wherein:
the document having the security information is generated by merging the security layer to a document layer in the document generating step; and
the security layer and the document layer laid one above the other can be outputted in the outputting step.

14. A print instruction apparatus comprising:
a judgment means for judging whether or not a document has a security layer given thereto;
a request means for requesting a user to enter a security cancellation code, if the judgment means judges that the document has a security layer given thereto;
a control means for cancelling the security layer if an appropriate security cancellation code is entered in response to the request, then giving a print instruction to a print apparatus.

15. The print instruction apparatus recited in Claim 14, corresponding to a personal computer connected to an image forming apparatus, wherein the image forming apparatus corresponds to the print apparatus.

16. A computer readable recording medium storing in itself a program to make a computer execute:
judging whether or not a document has a security layer given thereto;
requesting a user to enter a security cancellation code if it is judged in the judging step that the document has a security layer given thereto; and
cancelling the security layer if an appropriate security cancellation code is entered in response to the request, then giving a print instruction to a print apparatus.

17. The computer readable recording medium recited in Claim 16, wherein the print apparatus corresponds to an image forming apparatus and the computer is connected to the image forming apparatus.
